# EUROPÄISCHE PATENTSCHRIFT

(11) **EP 2 022 802 B1**
(45) Veröffentlichungstag und Bekanntmachung des Hinweises auf die Patenterteilung: **22.03.2017**
(21) Anmeldenummer: 07015803.5
(22) Anmeldetag: 10.08.2007
(51) Int. Cl.: C08B 15/04

(54) **Nanopartikel aus geringfügig oxidierter Cellulose**
Nanoparticles from slightly oxidised cellulose
Nanoparticule en cellulose peu oxydée

(43) Veröffentlichungstag der Anmeldung: 11.02.2009
(73) Patentinhaber: Dow Global Technologies LLC, Midland, MI 48674 (US)
(72) Erfinder: Nachtkamp, Klaus, Dr., 29664 Walsrode (DE); Krüger, Christa, Dr., 29640 Schneverdingen (DE); Engelhardt, Jürgen, Dr., 29683 Bad Fallingbostel (DE); Kriegisch, Volker, Dr., 29644 Walsrode (DE); Fischer, Steffen, Dr. habil., 01705 Freital (DE); Pinnow, Manfred, Dr., 14514 Teltow (DE); Hettrich, Kay, Dr., 14548 Schwielowsee / Caputh (DE)
(74) Vertreter: f & e patent

(56) Entgegenhaltungen:
- US-A- 5 780 618
- US-A1- 2011 259 537
- DATABASE WPI Derwent Publications Ltd., London, GB; AN 2006-728271 XP002457053 -& CN 1 749 278 A 22. März 2006 (2006-03-22)
- TSUGUYUKI SAITO ET AL: "TEMPO-mediated Oxidation of Native Cellulose: SEC-MALLS Analysis of Water-soluble and -Insoluble Fractions in the Oxidized Products" CELLULOSE, KLUWER ACADEMIC PUBLISHERS, DO, Bd. 12, Nr. 3, 1. Juni 2005 (2005-06-01), Seiten 305-315, XP019234562 ISSN: 1572-882X
- S. MONTANARI ET AL.: "Topochemistry of Carboxylated Cellulose Nanocrystals Resulting from TEMPO-Mediated Oxidation" MACROMOLECULES, Bd. 38, 2005, Seiten 1665-1671, XP002457052
- Römpp: Kolloidchemie
- "A GUIDEBOOK TO PARTICLE SIZE ANALYSIS", Horiba, 1 January 2014 (2014-01-01), XP055240722, Retrieved from the Internet: URL:https://www.horiba.com/fileadmin/uploa ds/Scientific/eMag/PSA/Guidebook/pdf/PSA_G uidebook.pdf [retrieved on 2016-01-13]

## Beschreibung

Die vorliegende Erfindung betrifft neuartige nanoskalige Cellulosepartikel sowie ein Verfahren zu deren Herstellung und die Verwendung.

Die Nanotechnologie wird neben der Informations- und Biotechnologie als die große technische Entwicklung unserer Gegenwart angesehen. Ganz allgemein befasst sich die Nanotechnologie mit dem Aufbau, den Eigenschaften und der Wirkung von Strukturen im Bereich von einigen hundert Nanometern (nm) und darunter. Anwendungen entstehen nahezu in allen Bereichen des täglichen Lebens, wie z. B. in der Energie- und Umwelttechnik, in der Informationstechnik sowie im pharmazeutischen und medizinischen Bereich.

Cellulose ist das am häufigsten vorkommende Biopolymer auf der Erde und damit der global bedeutendste nachwachsende Rohstoff. Als Hauptbestandteil der pflanzlichen Gerüstsubstanz weist Cellulose hervorragende molekulare Eigenschaften auf. Bereits im nativen Zustand liegen geordnete Bereiche (Kristallite) mit den typischen Abmessungen von Nanopartikeln (3-10 nm breit und bis zu 100 nm lang) vor. Diese Bereiche sind allerdings verbunden durch nichtkristalline Makromoleküle sowie durch Nebenvalenzbindungen (H-Brücken).

Zur Herstellung von cellulosebasierten Nanopartikeln, welche weitestgehend frei von Überstrukturen sind, sind verschiedene Ansätze bisher verfolgt worden. Allen ist die Überlegung gemein, einzelne Cellulosepartikel voneinander zu separieren und zu stabilisieren, um zu primärpartikulär vorliegende Teilchen zu gelangen, welche nicht durch harte irreversible Agglomeration miteinander verbunden sind.

Üblicherweise werden dazu mechanische und/oder chemische Verfahrensschritte durchlaufen (De Souza Lima, Borsali, Macromol. Rapid Commun. 25 (2004) 771, Ono, Shimaya, Hongo, Yamane, Transactions of the Materials Research Society of Japan 26 (2001) 569, loelovich, Leykin, Cellulose Chem. Technol. 40 (2006) 313, Zhang, Elder, Pu, Ragauskas, Carbohydr. Polym. 69 (2007) 607, US-A 2005 0239744, WO 2006/034837 A2, EP 1582551 A1, DE 3047351 C2).

Aus CN 1470552 ist die Herstellung von Cellulosepartikeln in einer Größenordnung von 50 bis 200 nm bekannt, wobei die Cellulose zunächst in einem geeigneten Lösungsmittel gelöst und anschließend durch intensives Rühren in eine Sedimentationslösung dispergiert wird. Zur Stabilisierung der dabei sich bildenden Partikel ist der Zusatz von externen Emulgatoren wie Fettsäuresalzen oder Alkylbenzolsulfonaten notwendig. Nach diesem Verfahren sind nur extrem verdünnte Dispersionen mit einem Cellulosegehalt von unterhalb 0,5 Gew.-% erhältlich.

Nach CN 1749278 A lässt sich ausgehend von Pflanzenfasern nach alkalischem Aufschluß, oxidativer Bleiche und Abbau mit Natronlauge und Chlorgas sowie anschließender intensiver Ultraschallbehandlung ein Gel erhalten, das sphärische Cellulosepartikel in einer Größe von 10 - 20 nm enthält. Nach diesem Verfahren ist ein erheblicher Polymerkettenabbau zu erwarten. Der Umfang dieses Kettenabbaus sowie Art und Umfang einer eventuellen Oxidation der Cellulose werden nach diesem Verfahren nicht bestimmt.

Oxidierte Cellulose mit unterschiedlich eingestelltem Oxidationsgrad werden von Montanari et al. (Macromolecules 38 (2005) 1665) zur Herstellung von carboxylierten Cellulose-Mikrofibrillen eingesetzt. Die Oxidation erfolgt in der Regel durch Umsetzung mit Natriumhypochlorit, Natriumbromid und 2,2,6,6-Tetramethyl-1-piperidinyloxyradikal (TEMPO) weitestgehend an C6-Position der Anhydroglucoseinheit (AGU). Die oxidierten Cellulosen werden säurehydrolytisch behandelt und anschließend mechanisch dispergiert. Im Ergebnis werden stabile Suspensionen erhalten. Die TEM-Aufnahmen zeigen, dass bei allen Proben noch die fibrilläre Struktur der Cellulose nachzuweisen ist, wobei die Fibrillenlängen deutlich über 200 nm liegen.

Weitere Möglichkeiten zur Bereitstellung oxidierter Cellulosen bestehen u. a. in der Oxidation mit Periodat (Oxidation vorwiegend in 2,3-Position der AGU), mit Phosphorsäure und Natriumnitrit (Oxidation vorwiegend in 6-Position der AGU) (Klemm, Philipp, T. Heinze, U. Heinze, Wagenknecht in "Comprehensive Cellulose Chemistry", Wiley-VCH Weinheim 1998, Vol. 2, S. 304-309).

Die Ergebnisse dieser Methoden sind jedoch hinsichtlich Feinteiligkeit und Verfahrensaufwand nicht befriedigend. Viele der in der Literatur beschriebenen Verfahren führen nämlich zu fibrillären Partikeln, die nur im Querschnitt nanoskalig sind und Faserlängen deutlich über 200 nm besitzen. Zur Herstellung nanopartikulärer Cellulose unter oxidativen Abbaubedingungen ist bisher nur ein Verfahren mit erheblichem Aufwand und hoher Umweltbelastung bekannt, nämlich das in CN1749278 beschriebene Verfahren. Weiterhin ist der Zusatz externer, nicht kovalent mit den Partikeln verbundener Stabilisatoren unerwünscht, da sie ausgewaschen werden können oder in vielen Anwendungen, z. B. im Bereich pharmazeutischer Zubereitungen stören.

US 5780618 offenbart eine Methode zur Herstellung von oxidierten Celluloseprodukten ausgehend von einem Cellulosematerial. Die oxidierten Celluloseprodukte können dazu genutzt werden um Filme, Dispersionen, Gele zu bilden oder als Träger für pharmazeutische, kosmetische oder andere Produkte.

Saito et all. (Cellulose 2005, 12:305-315) beschreibt TEMPO-vermittelte Oxidation von Cellulose.

Aufgabe der vorliegenden Erfindung war es daher, neuartige primärpartikulär dispergierbare Nanopartikel auf Cellulose-Basis bereitzustellen, welche sich durch ein vergleichsweise technisch einfach zu realisierendes Verfahren ohne den zusätzlichen Verfahrensschritt des säurehydrolytischen Abbaus der Cellulose herstellen lassen und zur Partikelbildung nicht notwendigerweise auf externe Emulgatoren angewiesen sind.

Es wurde nun gefunden, dass die zugrunde liegende Aufgabe durch Scher- oder Ultraschalldispergierung spezieller geringfügig oxidierter Cellulose gelöst werden kann.

Gegenstand der Erfindung sind daher Partikel aus geringfügig oxidierter Cellulose mit volumengemittelten Partikelgrößen (D50-Wert) von weniger als 300 nm, bevorzugt weniger als 200 nm, besonders bevorzugt weniger als 100 nm, gemessen mittels dynamischer Laserlichtstreumessung.

Ferner ist ein Gegenstand der vorliegenden Erfindung ein Verfahren zur Herstellung von Dispersionen enthaltend Partikel geringfügig oxidierter Cellulose mit volumengemittelten Partikelgrößen (D50-Wert) von weniger als 300 nm, bevorzugt weniger als 200 nm, besonders bevorzugt weniger als 100 nm, gemessen mittels dynamischer Laserlichtstreuung, bei dem
a) geringfügig oxidierte, nicht nanoskalige Cellulosen in ein wäsariges, vorzugsweise nicht stark acides, Medium eingebracht und
b) gleichzeitig oder anschließend durch Eintrag von Energie darin dispergiert werden.

Der D90-Wert, und bevorzugt auch der D95-Wert, der amorphen Cellulosepartikel weniger als 300 nm, bevorzugt weniger als 200 nm, besonders bevorzugt weniger als 100 nm beträgt, wobei die Partikel dabei vorzugsweise agglomeratfrei, d. h. primärpartikulär dispers, vorliegen.

Die Bereitstellung der im Sinne von Schritt a) geeigneten geringfügig oxidierten, nicht nanoskaligen Cellulose kann von allen kommerziellen Zellstoffen (z. B. Chemie- und Papierzellstoffe), mikrokristalliner Cellulose oder Linterscellulose ausgehen.

Unter "nicht nanoskaliger Cellulose" wird dabei Cellulose verstanden, die eine volumengemittelte Partikelgröße (D50-Wert) von mindestens 300 nm, bevorzugt mindestens 200 nm, besonders bevorzugt mindestens 100 nm, bestimmt mittels dynamischer Laserlichtstreumessung aufweist.

Die erforderliche geringfügige Oxidation erfolgt dabei durch literaturbekannte Verfahren, durch Oxidation mittels Periodat, Phosphorsäure/Natriumnitrit, oder Natriumhypochlorit unter TEMPO-Katalyse, wobei TEMPO-katalysierte Natriumhypochlorit-Oxidation bevorzugt ist. Bei der Oxidation mittels Periodat erfolgt vorrangig eine oxidierende Ringspaltung zwischen der C2- und der C3-Position der Glucoseeinheiten, wobei jeweils zwei OH-Gruppen zu zwei AldehydGruppen oxidiert werden. Hingegen führt die Oxidation durch Phosphorsäure/Natriumnitrit oder durch TEMPO-katalysiertes Natriumhypochlorit vorrangig zur Oxidation der primären OH-Gruppe an der C6-Position zu einer Carboxylgruppe.

Die geringfügig oxidierten Cellulosen besitzen typischerweise Durchschnittspolymerisationsgrade (DP) von 100 bis 3000, bevorzugt von 200 bis 2500, bevorzugter 250 bis 2000, besonders bevorzugt von 300 bis 1500. Der Einsatz besonders kurzkettiger geringfügig oxidierter Cellulosen, z. B. durch vorhergehende Säurehydrolyse, ist nicht notwendig.

Der Gehalt an Carboxyl- oder Carbonylgruppen in den in Schritt a) eingesetzten geringfügig oxidierten Cellulose liegt im Bereich 200 bis 1500 mmol/kg, bevorzugt im Bereich 300 bis 1200 mmol/kg, besonders bevorzugt 400 bis 900 mmol/kg.

Als Medium zur Dispergierung der Partikel wird vorzugsweise Wasser verwendet. Der pH-Wert des nicht stark aciden wässrigen Mediums liegt vorzugsweise im Bereich oberhalb von 5, bevorzugter oberhalb von 6, weiter bevorzugter im Bereich von 6 bis 10, und besonders bevorzugt von 6,5 bis 8.

Der Energieverbrauch für die Dispergierung beträgt mindestens 2000 kWh/t, bevorzugt mindestens 5000 kWh/t, besonders bevorzugt mindestens 10000 kWh/t.

Zum Eintrag von Energie in Schritt b) eignen sich grundsätzlich sämtliche dem Fachmann bekannte Vorrichtungen und Techniken zu diesem Zweck. Bevorzugt ist der Einsatz von Ultraschallgeräten, Hochgeschwindigkeitsrührer, Dispergiereinrichtungen basierend auf dem Rotor-Stator-Prinzip (z.B. Ultra-Turrax-Geräte), Strahldispergatoren und Mikrofluidizer.

Ultra-Turrax-Geräte sind Dispergiereinrichtungen zum Emulgieren, Homogenisieren und Suspendieren fließfähiger Medien. Die wirksame Frequenz ist einstellbar und kann dem zu bearbeitenden Stoff oder Stoffgemisch angepasst werden.

Das Prinzip eines Mikrofluidizer lässt sich wie folgt beschreiben. Das zu verarbeitende Material wird unter hohem Druck durch eine Interaktionskammer geführt. Die Probe strömt durch eine oder zwei schmale Kanäle und erreicht lineare Geschwindigkeiten in Abhängigkeit vom Gerätetyp bis 1000 m/s. So entstehen enorme Scherkräfte. In der Kammer gibt es keine beweglichen Teile, wodurch eine enge Partikel- und Tröpfchenverteilung gewährleistet wird.

Der Energieeintrag in Stufe b) kann grundsätzlich ein- oder mehrstufig aber auch kontinuierlich mit variablem Energieeintrag erfolgen.

Die in Schritt b) erhaltene Dispersion weist eine Feststoffkonzentration an geringfügig oxidierter Cellulose von bevorzugt 0,1 bis 10 Gew.-%, besonders bevorzugt 0,5 bis 3,5 Gew.-%, ganz besonders bevorzugt 0,75 bis 2,5 Gew.-%, auf.

Durch die in Schritt b) erfolgende Dispergierung, insbesondere durch den Energieeintrag, kann sich der Polymerisationsgrad der amorphen Cellulose verringern. Dabei ist ein Polymerisationsgradabbau von 5 bis 50% möglich. Infolgedessen kann die in Schritt b) erhaltene amorphe Cellulose einen durchschnittlichen Polymerisationsgrad von 50 bis 2900, bevorzugt 100 bis 2400 aufweisen.

Der Zusatz von Dispersionsmitteln oder Emulgatoren zur Stabilisierung der Celluslosedispersion ist nach dem erfindungsgemäßen Verfahren nicht notwendig. In einer bevorzugten Ausführungsform der Erfindung wird daher vor, während oder nach dem Dispergierschritt b) kein Dispersionsmittel bzw. Emulgator, vorzugsweise kein Fettsäuresalz oder Alkylbenzolsulfonat, zugesetzt. Gleichwohl kann durch Zusatz solcher Mittel eine weitere Stabilisierung erreicht werden.

Bevorzugt wird das erfindungsgemäße Verfahren, insbesondere Schritt b), bei Temperaturen 10 bis 100 °C, besonders bevorzugt 20 bis 80 °C durchgeführt.

### Beispiele:

Die in den Beispielen eingesetzten oxidierten Cellulosen wurden durch Umsetzung mit Natriumhypochlorit und TEMPO hergestellt (Montanari et al., Macromolecules 38 (2005) 1665). Zur Dispergierung der Cellulosederivate in Wasser wurde ein Hochgeschwindigkeitsrührer nach dem Rotor-Stator-Prinzip eingesetzt (Ultra Turrax T25 basic, IKA, Umdrehungsgeschwindigkeit 20 000 min⁻¹). Zur weiteren Homogenisierung wurde ein Mikrofluidizer vom Typ 110F (Microfluidics, Newton MA USA) mit zwei in Reihe geschalteten Interaktionskammern (H210Z 200 µm und JR20Z 50 µm) verwendet.

Die Bestimmung des Gehalts an Carboxylgruppen erfolgte gemäß der Norm TAPPI T 237 cm-98 (Carboxyl content of pulp).

Die dynamische Laserlichtstreumessung erfolgte mit dem Gerät Horiba LB 550 (USA) mit einem Messbereich von 1 nm bis 6 µm. Dazu werden die Diffusionsgeschwindigkeiten der suspendierten Partikel über die Doppler-Verschiebung in der Frequenz des an ihnen gestreuten Laserlichts gemessen. Die Frequenzverschiebungen werden als Intensitätsschwankungen des Streulichtes an einem Detektor erfasst. Es werden sowohl die D50-Werte (50% der Teilchen sind kleiner als die angegebene Dimension) als auch die D90-Werte (90% der Teilchen sind kleiner als die angegebene Dimension) bestimmt.

### Beispiel 1

Eine 1 Gew.-%ige (w/w) Suspension von oxidierter Cellulose mit einem Gehalt an Carboxylgruppen von 600 mmol/kg und einem DP_{Cuen(Kupfer(II)ethylendiaminlösung)} = 858 in Wasser wurde zunächst 1 Stunde mit einem Ultra-Turrax aufgeschlagen und anschließend mit einem Mikrofluidizer für 1 Stunde bei 600 bar und weitere 2 Stunden bei 1100 bar homogenisiert.

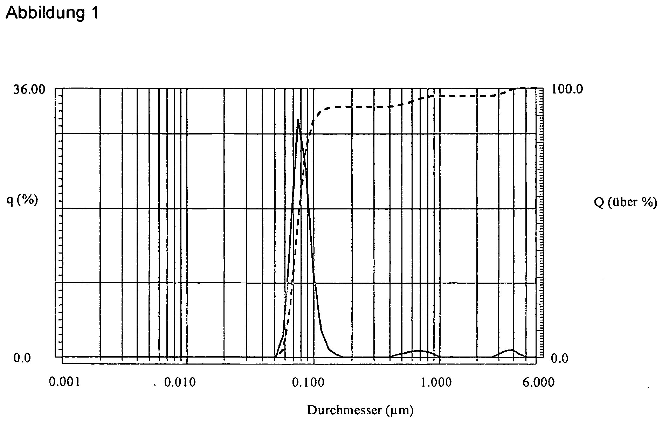

Abbildung 1 zeigt die dynamische Laserlichtstreumessung der Nano-Carboxycellulose-Dispersion (1 Gew.-%) hergestellt nach Beispiel 1.

Die Dynamische Laserlichtstreumessung dieser Probe zeigt einen D50-Wert von 76 nm sowie einen D90-Wert von 107 nm.

### Beispiel 2

Eine 1 Gew.-%ige (w/w) Suspension von oxidierter Cellulose mit einem Gehalt an Carboxylgruppen von 453 mmol/kg und einem DP_{Cuen} = 1479 in Wasser wurde zunächst 1 Stunde mit einem Ultra-Turrax aufgeschlagen und anschließend mit einem Mikrofluidizer für 1 Stunde bei 600 bar und weitere 2 Stunden bei 1100 bar homogenisiert.

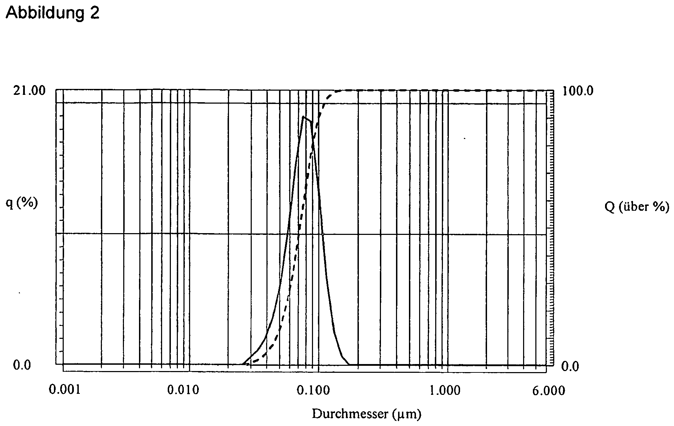

Abbildung 2 zeigt die dynamische Laserlichtstreumessung der Nano-Carboxycellulose-Dispersion (1 Gew.-%) hergestellt nach Beispiel 2.

Die Dynamische Laserlichtstreumessung dieser Probe zeigt einen D50-Wert von 72 nm sowie einen D90-Wert von 100 nm.

### Beispiel 3

Eine 1 Gew.-%ige (w/w) Suspension von oxidierter Cellulose mit einem Gehalt an Carboxylgruppen von 550 mmol/kg und einem DP_{Cuen} = 1322 in Wasser wurde zunächst 1 Stunde mit einem Ultra-Turrax aufgeschlagen und anschließend mit einem Mikrofluidizer für 1 Stunde bei 600 bar und weitere 2 Stunden bei 1100 bar homogenisiert.

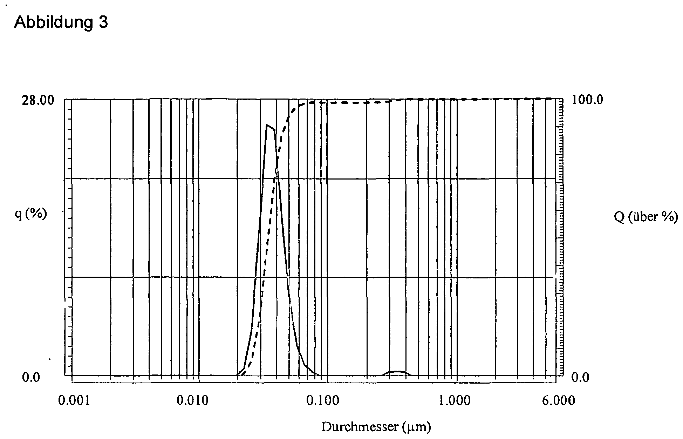

Abbildung 3 zeigt die dynamische Laserlichtstreumessung der Nano-Carboxycellulose-Dispersion (1 Gew.-%) hergestellt nach Beispiel 3.

Die Dynamische Laserlichtstreumessung dieser Probe zeigt einen D50-Wert von 34 nm sowie einen D90-Wert von 47 nm.

## Patentansprüche

1. Verfahren zur Herstellung einer Dispersion enthaltend Partikel aus geringfügig oxidierter Cellulose bei dem
a) geringfügig oxidierte, nicht nanoskalige Cellulose in ein wässriges, vorzugsweise nicht acides Medium eingebracht und
b) gleichzeitig oder anschließend durch Eintrag von Energie darin dispergiert wird,
wobei der D50-Wert und der D90-Wert der volumengemittelten Partikelgröße weniger als 300 nm, bevorzugt weniger als 200 nm, bevorzugter weniger als 100 nm, bestimmt mittels dynamischer Laserlichtstreuung, beträgt und wobei die eingesetzte geringfügig oxidierte Cellulose mittels Periodat-Oxidation, Phosphorsäure/Natriumnitrit-Oxidation oder TEMPO-katalysierter Natriumhypochlorit-Oxidation gewonnen wird, wobei die eingesetzte geringfügig oxidierte Cellulose einen Gehalt an Carboxylgruppen oder Carbonylgruppen von 200 bis 1500 mmol/kg aufweist.

2. Verfahren nach Anspruch 1, wobei der D90-Wert, und bevorzugt der D95-Wert, der dispergierten Partikel weniger als 300 nm, bevorzugt weniger als 200 nm, bevorzugter weniger als 100 nm, beträgt.

3. Verfahren nach Anspruch 1 oder 2, wobei die eingesetzte geringfügig oxidierte Cellulose aus Chemiezellstoff, Papierzellstoff, mikrokristalliner Cellulose, oder Linterscellulose gewonnen wird.

4. Verfahren nach einem der vorherigen Ansprüche, wobei die eingesetzte geringfügig oxidierte Cellulose einen durchschnittlichen Polymerisationsgrad von 100 bis 3000, bevorzugt 200 bis 2500, bevorzugter 250 bis 2000, besonders bevorzugt 300 bis 1500, aufweist.

5. Verfahren nach einem der vorherigen Ansprüche, wobei die eingesetzte geringfügig oxidierte Cellulose einen Gehalt an Carboxylgruppen oder Carbonylgruppen von 300 bis 1200 mmol/kg aufweist.

6. Verfahren nach einem der vorherigen Ansprüche, wobei in Schritt b) mindestens 2000 kWh/t, bevorzugt mindestens 5000 kWh/t, besonders bevorzugt mindestens 10000 kWh/t, Energie eingetragen wird.

7. Verfahren nach einem der vorherigen Ansprüche, wobei der Eintrag von Energie in Schritt b) durch Ultraschallgeräte, Hochgeschwindigkeitsrührer, Dispergiereinrichtungen basierend auf dem Rotor-Stator-Prinzip, Strahldispergatoren oder Mikrofluidizern erfolgt.

8. Verfahren nach einem der vorherigen Ansprüche, wobei die in Schritt b) erhaltene Dispersion eine Feststoffkonzentration an geringfügig oxidierter Cellulose von 0,1 bis 10 Gew.-%, bevorzugt 0,5 bis 3,5 Gew.-%, ganz besonders bevorzugt 0,75 bis 2,5 Gew.-%, aufweist.

9. Verfahren nach einem der vorherigen Ansprüche, wobei vor, während oder nach dem Dispergierschritt b) kein Dispersionsmittel, vorzugsweise kein Fettsäuresalz oder Alkylbenzolsulfonat, zugesetzt wird.

10. Verfahren nach einem der vorherigen Ansprüche, wobei Schritt b), bei Temperaturen 10 bis 100 °C, bevorzugt bei 20 bis 80 °C durchgeführt wird.

11. Dispersion enthaltend Partikel aus geringfügig oxidierter Cellulose, wobei der D50-Wert, und der D90-Wert, der volumengemittelten Partikelgröße weniger als 300 nm, bevorzugt weniger als 200 nm, bevorzugter weniger als 100 nm, bestimmt mittels dynamischer Laserlichtstreuung, beträgt und wobei in der Dispersion die Feststoffkonzentration der geringfügig oxidierten Cellulose 0,1 bis 10 Gew.-% beträgt und die geringfügig oxidierte Cellulose einen durchschnittlichen Polymerisationsgrad von 100 bis 3000, bevorzugt 100 bis 2400 aufweist, wobei die eingesetzte geringfügig oxidierte Cellulose einen Gehalt an Carboxylgruppen oder Carbonylgruppen von 200 bis 1500 mmol/kg aufweist.

12. Dispersion nach Anspruch 11, wobei die geringfügig oxidierte Cellulose aus Chemiezellstoff, Papierzellstoff, mikrokristalliner Cellulose, oder Linterscellulose gewonnen wird.

13. Dispersion nach einem der Ansprüche 11 bis 12, wobei in der Dispersion die Feststoffkonzentration der geringfügig oxidierten Cellulose 0,5 bis 3,5 Gew.-% beträgt.

14. Dispersion erhältlich durch ein Verfahren nach einem der Ansprüche 1 bis 10.

15. Partikel aus geringfügig oxidierter Cellulose wie sie in der Dispersion nach einem der Ansprüche 11 bis 14 enthalten sind.

## Claims

1. Process for producing a dispersion containing particles of slightly oxidized cellulose, which process comprises
a) slightly oxidized non-nanoscale cellulose being introduced into an aqueous, preferably non-acidic, medium and
b) being simultaneously or subsequently dispersed therein by input of energy,
wherein the D50 value and the D90 value of the volume-average particle size is less than 300 nm, preferably less than 200 nm, more preferably less than 100 nm, determined by dynamic laser light scattering, and wherein the slightly oxidized cellulose used is obtained by periodate oxidation, phosphoric acid/sodium nitrite oxidation or TEMPO-catalysed sodium hypochlorite oxidation, wherein the slightly oxidized cellulose used has a carboxyl group or carbonyl group content of 200 to 1500 mmol/kg.

2. Process according to claim 1, wherein the D90 value, and preferably the D95 value, of the dispersed particles is less than 300 nm, preferably less than 200 nm, more preferably less than 100 nm.

3. Process according to claim 1 or 2, wherein the slightly oxidized cellulose used is obtained from chemical pulp, paper-grade pulp, microcrystalline cellulose or linters cellulose.

4. Process according to any of the preceding claims, wherein the slightly oxidized cellulose used has an average degree of polymerization in the range from 100 to 3000, preferably 200 to 2500, more preferably 250 to 2000 and most preferably 300 to 1500.

5. Process according to any of the preceding claims, wherein the slightly oxidized cellulose used has a carboxyl group or carbonyl group content of 300 to 1200 mmol/kg with regard to the slightly oxidized cellulose.

6. Process according to any of the preceding claims, wherein the energy input in step b) is at least 2000 kWh/t, preferably at least 5000 kWh/t, more preferably 10000 kWh/t.

7. Process according to any of the preceding claims, wherein the input of energy in step b) is effected via ultrasonicators, high-speed stirrers, dispersing devices based on the rotor-stator principle, jet dispersers or dispersing devices of the microfluidizer type.

8. Process according to any of the preceding claims, wherein the dispersion obtained in step b) has a solids concentration with regard to slightly oxidized cellulose in the range from 0.1 % to 10% by weight, preferably 0.5 to 3.5 % by weight, most preferably 0.75 to 2.5 % by weight.

9. Process according to any of the preceding claims, wherein no dispersant, preferably no fatty acid salt or alkylbenzenesulphonate, is added before, during or after dispersing step b).

10. Process according to any of the preceding claims, wherein step b) is carried out at temperatures of 10 to 100° C, preferably 20 to 80°C.

11. Dispersion containing particles of slightly oxidized cellulose, wherein the D50 value, and the D90 value, of the volume-average particle size is less than 300 nm, preferably less than 200 nm, more preferably less than 100 nm, determined by dynamic laser light scattering, and wherein the solids concentration of the slightly oxidized cellulose in the dispersion is in the range from 0.1 % to 10% by weight and the slightly oxidized cellulose has an average degree of polymerization in the range from 100 to 3000, preferably 100 to 2400, wherein the slightly oxidized cellulose used has a carboxyl group or carbonyl group content of 200 to 1500 mmol/kg with regard to the slightly oxidized cellulose..

12. Dispersion according to claim 11, wherein the slightly oxidized cellulose is obtained from chemical pulp, paper-grade pulp, microcrystalline cellulose or linters cellulose.

13. Dispersion according to any of claims 11 to 12, wherein the solids concentration of the slightly oxidized cellulose in the dispersion is in the range from 0.5% to 3.5% by weight.

14. Dispersion obtainable by a process according to any of claims 1 to 10.

15. Particles of slightly oxidized cellulose as present in the dispersion according to any of claims 11 to 14.

## Revendications

1. Procédé pour la préparation d'une dispersion contenant des particules de cellulose légèrement oxydée dans lequel
a) de la cellulose non nanométrique légèrement oxydée est introduite dans un milieu aqueux, de préférence non acide, et
b) est dispersée dans celui-ci simultanément ou subséquemment par apport d'énergie,
dans lequel la valeur de D50 ainsi que la valeur de D90 de la taille de particule moyenne en volume atteignent moins de 300 nm, de préférence moins de 200 nm, plus préférablement moins de 100 nm, lesquelles sont déterminées au moyen d'une diffusion dynamique de lumière laser et dans lequel la cellulose légèrement oxydée utilisée est obtenue au moyen d'une oxydation par un périodate, d'une oxydation par de l'acide phosphorique/du nitrite de sodium ou d'une oxydation par de l'hypochlorite de sodium catalysée par TEMPO, dans lequel la cellulose légèrement oxydée utilisée présente une teneur en groupes carboxyle ou en groupes carbonyle de 200 à 1 500 mmol/kg.

2. Procédé selon la revendication 1, dans lequel la valeur de D90, et de préférence la valeur de D95, des particules dispersées atteint moins de 300 nm, de préférence moins de 200 nm, plus préférablement moins de 100 nm.

3. Procédé selon la revendication 1 ou la revendication 2, dans lequel la cellulose légèrement oxydée utilisée est obtenue à partir de pâte chimique, de pâte à papier, de cellulose microcristalline, ou de cellulose de fibres.

4. Procédé selon l'une des revendications précédentes, dans lequel la cellulose légèrement oxydée utilisée présente un degré de polymérisation moyen de 100 à 3 000, de préférence de 200 à 2 500, plus préférablement de 250 à 2 000, de manière particulièrement préférée de 300 à 1 500.

5. Procédé selon l'une des revendications précédentes, dans lequel la cellulose légèrement oxydée utilisée présente une teneur en groupes carboxyle ou en groupes carbonyle de 300 à 1 200 mmol/kg.

6. Procédé selon l'une des revendications précédentes, dans lequel à l'étape b) l'apport énergétique est d'au moins 2 000 kWh/t, de préférence d'au moins 5 000 kWh/t, de manière particulièrement préférée d'au moins 10 000 kWh/t.

7. Procédé selon l'une des revendications précédentes, dans lequel l'apport d'énergie à l'étape b) s'effectue par l'intermédiaire d'appareils à ultrasons, d'agitateurs à grande vitesse, de dispositifs de dispersion se basant sur le principe de rotor-stator, de disperseurs à jet ou de microfluidiseurs.

8. Procédé selon l'une des revendications précédentes, dans lequel à l'étape b) la dispersion obtenue présente une concentration en matières solides de cellulose légèrement oxydée de 0,1 à 10 % en poids, de préférence de 0,5 à 3,5 % en poids, idéalement de 0,75 à 2,5 % en poids.

9. Procédé selon l'une des revendications précédentes, dans lequel il n'est ajouté aucun agent dispersant, de préférence aucun sel d'acide gras ni sulfonate d'alkylbenzène, avant, durant ou après l'étape de dispersion b).

10. Procédé selon l'une des revendications précédentes, dans lequel l'étape b) est menée à des températures de 10 à 100 °C, de préférence de 20 à 80 °C.

11. Dispersion contenant des particules de cellulose légèrement oxydée, dans laquelle la valeur de D50, ainsi que la valeur de D90, de la taille de particule moyenne en volume atteignent moins de 300 nm, de préférence moins de 200 nm, plus préférablement moins de 100 nm, lesquelles sont déterminées au moyen d'une diffusion dynamique de lumière laser et dans laquelle la concentration en matières solides de la cellulose légèrement oxydée dans la dispersion atteint une valeur de 0,1 à 10 % en poids et la cellulose légèrement oxydée présente un degré de polymérisation moyen de 100 à 3 000, de préférence de 100 à 2 400, dans laquelle la cellulose légèrement oxydée utilisée présente une teneur en groupes carboxyle ou en groupes carbonyle de 200 à 1 500 mmol/kg.

12. Dispersion selon la revendication 11, dans laquelle la cellulose légèrement oxydée est obtenue à partir de pâte chimique, de pâte à papier, de cellulose microcristalline, ou de cellulose de fibres.

13. Dispersion selon l'une des revendications 11 à 12, dans laquelle la concentration en matières solides de la cellulose légèrement oxydée dans la dispersion atteint une valeur de 0,5 à 3,5 % en poids.

14. Dispersion pouvant être obtenue par l'intermédiaire d'un procédé selon l'une des revendications 1 à 10.

15. Particules de cellulose légèrement oxydée telles qu'elles sont contenues dans la dispersion selon l'une des revendications 11 à 14.
